Europäisches Patentamt

European Patent Office

Office européen des brevets

(11) Numéro de publication: **0 211 743**
**B1**

(12) ## FASCICULE DE BREVET EUROPEEN

(45) Date de publication du fascicule du brevet:
**18.10.89**

(51) Int. Cl.⁴: **E06B 7/23**

(21) Numéro de dépôt: **86401636.5**

(22) Date de dépôt: **22.07.86**

(54) Joint d'étanchéité conformable à froid.

(30) Priorité: **24.07.85 FR 8511305**

(43) Date de publication de la demande:
**25.02.87 Bulletin 87/9**

(45) Mention de la délivrance du brevet:
**18.10.89 Bulletin 89/42**

(84) Etats contractants désignés:
**DE GB IT NL SE**

(56) Documents cités:
**DE-A- 3 019 532**
**FR-A- 1 599 464**
**GB-A- 355 473**
**US-A- 2 419 322**

(73) Titulaire: **HUTCHINSON, 2 rue Balzac, F-75008 Paris(FR)**

(72) Inventeur: **Faure-Bondat, Joseph Alphonse,**
**F-38500 Saint-Nicolas de Macherin(FR)**

(74) Mandataire: **Orès, Bernard et al, Cabinet**
**ORES 6, Avenue de Messine, F-75008 Paris(FR)**

ACTORUM AG

## Description

La présente invention est relative à un joint d'étanchéité conformable à froid et destiné en particulier à l'industrie du bâtiment, des véhicules automobiles, des appareils électroménagers ou autres.

Dans l'Art antérieur la conformation d'un joint d'étanchéité, notamment en élastomère, (lequel joint comporte notoirement une portion d'ancrage ou de fixation et une portion d'étanchéité reliées l'une à l'autre directement ou par l'intermédiaire d'une éventuelle portion de liaison), - à savoir, l'adaptation d'un joint à un profil curviligne à priori quelconque et notamment correspondant à une ou plusieurs portions arrondies d'un des deux éléments entre lesquels le joint doit assurer l'étanchéité, c'est-à-dire de celui de ces deux éléments qui est destiné à supporter le joint -, se réalise selon l'une ou l'autre des opérations suivantes :
- soit par formage à cru de l'élastomère dont se compose le joint, et ce autour d'un gabarit,
- soit par moulage par injection (ou par transfert) de la ou des portions arrondies, notamment correspondant aux coins d'un cadre métallique, en matière plastique, en bois ou autre, après avoir préalablement disposé entre le moule ou les moules d'angle les portions rectilignes du joint (lesquelles portions rectilignes ont été préalablement extrudées ou moulées à part et coupées à la longueur voulue et se soudent aux portions curvilignes lors du moulage de ces dernières).

Toutefois, ces techniques utilisées dans l'Art antérieur présentent des inconvénients, notamment :
- en ce qui concerne le formage à cru, cette opération présente toujours le risque de déformer les portions du joint qui doivent rester rectilignes et qui se trouvent de part et d'autre par rapport à la portion du joint qui doit être rendue curviligne, et
- en ce qui concerne le moulage (localisé) par injection (ou par transfert), il s'agit d'une opération coûteuse et très consommatrice en temps et en main-d'œuvre. On connaît aussi la Demande de Brevet allemand DE-3 019 532 qui décrit un joint flexible en matière plastique, à usage universel, et plus particulièrement destiné aux coffrages en bois pour le moulage de structures en béton. Ce joint, qui est réalisé par moulage à partir d'un élastomère durcissable à froid, comporte une armature flexible noyée dans la matière élastomère et consistant en un fil, métallique ou textile, de diamètre approprié. Cette armature a une ténacité supérieure à celle de la matrice, en sorte qu'elle rend le joint stable à l'état déformé.

Toutefois, la fabrication de ce type d'armature ne peut pas avoir lieu simultanément avec le moulage de la matrice élastomère, – ce qui augmente le temps de fabrication –, et ne permet pas toujours l'adaptation du joint à une pluralité de profils curvilignes simultanément au montage du joint, notamment lorsque celui-ci présente une longueur importante, ce qui nécessite l'utilisation de gabarits et a une influence sur le temps de pose.

La présente invention a par conséquent pour but de pourvoir à un joint d'étanchéité et à un procédé de conformation à froid de ce joint qui répondent mieux aux nécessités de la pratique que les joints et les procédés antérieurement connus, notamment :
- en ce que la conformation du joint dans sa totalité se fait sur place, au moment de l'utilisation, et ce à la main dans la plupart des applications, notamment dans le cas de joints constitués par des profilés dont les dimensions transversales sont relativement petites, et
- en ce que la portion d'étanchéité du joint ne se déforme pas ou ne se plisse pas, tout en se conformant – comme la portion d'ancrage (et l'éventuelle portion de liaison) – aux profils curvilignes.

La présente invention a pour objet un joint en élastomère destiné à rendre étanche l'interstice existant entre un premier élément et un deuxième élément, ledit joint étant du type constitué par un profilé comportant une portion d'étanchéité et une portion d'ancrage ou de fixation à l'un ou l'autre desdits premier et deuxième éléments, à savoir à celui de ces deux éléments qui est destiné à supporter le joint, qui sont reliées entre elles directement ou par l'intermédiaire d'une éventuelle portion de liaison, lequel joint comporte un moyen de conformation du profilé qui est intégré au joint élastomère et permet son adaptation à froid à une ou plusieurs portions ayant un profil curviligne a priori quelconque et appartenant à celui desdits premier et deuxième éléments qui supporte le joint, ce joint étant caractérisé en ce que ledit moyen de conformation à froid du profilé est constitué par au moins un cordon, de section appropriée, qui est réalisé en une matière plastique, également appropriée.

Conformément à l'invention, lorsque celui desdits premier et deuxième éléments qui supporte le joint présente une ou plusieurs portions à profil curviligne qui sont contenues dans le plan longitudinal de symétrie du joint à l'état monté et conformé, les centres de courbure de ces portions à profil curviligne étant situés à l'intérieur de l'espace délimité par le profilé à l'état précité, le profilé comporte un cordon unique et continu en matière plastique qui est contenu dans ledit plan de symétrie du profilé dans la portion qui est la plus éloignée ce chacun desdits centres de courbure.

Selon une modalité avantageuse de cette disposition, ledit cordon unique continu est disposé à la partie inférieure de la portion d'ancrage du joint.

Outre les dispositions qui précèdent, l'invention comprend encore d'autres dispositions qui ressortiront de la description qui va suivre.

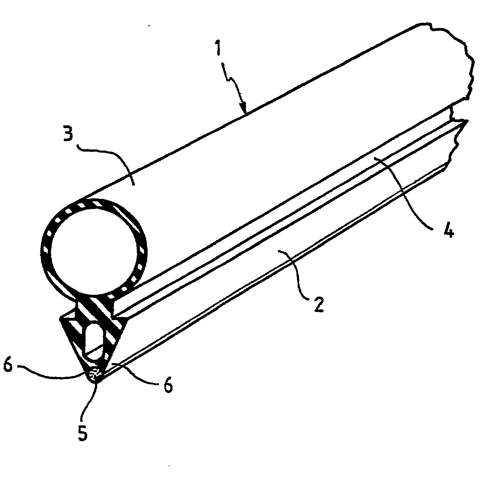

L'invention sera mieux comprise à l'aide du complément de description qui va suivre, qui se réfère aux dessins annexés, dans lesquels:
- la figure unique illustre une vue en perspective et en coupe transversale d'un joint d'étanchéité constitué par un profilé en élastomère conforme à la présente invention.

Il doit être bien entendu, toutefois, que ces dessins et les parties descriptives correspondantes, sont donnés uniquement à titre d'illustration de l'objet de l'invention, dont ils ne constituent en aucune manière une limitation.

Le joint d'étanchéité est constitué par un profilé 1 en élastomère comportant une portion d'ancrage 2 et une portion d'étanchéité 3 qui sont reliées entre elles par l'intermédiaire d'une portion de liaison 4.

La portion d'ancrage 2 est destinée à être logée notamment par emboîtement par pression, dans la feuillure ménagée dans un élément constitué, en particulier, par un cadre ou châssis (non représenté), tandis que le joint proprement dit 3 est destiné à assurer l'étanchéité entre ce cadre ou châssis et un autre élément, par exemple en forme de plaque (et également non représenté). Pour faciliter l'emboîtement de la portion d'ancrage et l'adaptation de la portion d'étanchéité 3 à 1 interstice existant entre lesdits deux éléments, ces deux portions 2 et 3 présentent une configuration tubulaire : toutefois, la structure tubulaire de ces portions n'est pas impérative et donc limitative dans le cadre de la présente invention, dans ce sens que les portions d'ancrage 3 et d'étanchéité 2 peuvent présenter une structure pleine et une forme à priori quelconque.

Conformément à l'invention, le profilé 1 comporte un moyen de conformation à froid constitué par un cordon 5 en matière plastique qui est intégré au profilé 1, notamment lors de sa fabrication et en particulier par co-extrusion. Deux lèvres latérales 6, venues de l'opération d'extrusion du joint élastomère 2-3-4 serrent ou emprisonnent le cordon 5 à la partie inférieure de la portion d'ancrage 2. La conformation à froid du profilé 1, à savoir son adaptation à une ou plusieurs portions à profil curviligne d'un desdits deux éléments entre lesquels doit être assurée l'étanchéité (c'est-à-dire la conformation à celui des deux éléments qui est destiné à supporter le joint), est obtenue, suivant l'invention, par simple étirage du joint qui, dans la plupart des applications courantes, peut être effectué à la main.

Cette opération d'étirage est dosée, d'une part, de façon à éviter de casser le cordon en matière plastique et la partie élastomère du profilé et, d'autre part, de façon à induire dans la zone du cordon 5 soumise à étirage une déformation plastique, donc permanente ou irréversible.

Il est donc facile de comprendre que, lorsque l'effort de traction est annulé, on a d'un côté la partie en élastomère du joint qui tend à reprendre la configuration initiale, tandis que de l'autre côté se manifeste dans le cordon un allongement résiduel ; or, en raison de la solidarisation existante entre l'élastomère et le cordon, ce dernier est obligé de suivre la réaction élastique de rappel agissant sur l'élastomère, ce qui donne automatiquement une configuration curviligne à la zone préalablement étirée. Cette configuration curviligne est telle que, par rapport au centre de courbure, la partie en élastomère 2-3-4 du profilé est située à l'intérieur, tandis que le cordon 5 se situe à l'extérieur. La conformation à la courbure des portions à profil curviligne de l'élément auquel doit s'adapter le profilé est obtenue par tentatives successives, voir par une tentative unique dans la plupart des applications.

Ce qui est en outre très remarquable avec le profilé selon l'invention est que l'opération de conformation par étirage ne déforme en aucune manière en particulier ladite portion d'étanchéité 3, qui peut donc continuer à exercer efficacement son rôle.

La disposition du cordon 5, telle que représentée à la figure unique annexée à la présente description, s'applique au cas - généralement vérifié dans la pratique - où le centre (ou les centres) de courbure des portions curvilignes de l'élément destiné à supporter le profilé, tombe(nt) à l'intérieur de la surface délimitée par le profilé à l'état conformé, les portions à profil curviligne susdites étant contenues, comme le cordon unique et continu, dans le plan longitudinal (ou axial) de symétrie du joint.

Il va de soi que, pour chaque application, la section du cordon continu ou des segments de cordon est choisie en particulier, en fonction des dimensions du profilé élastomère. En ce qui concerne les matériaux dans lesquels le cordon ou les segments peuvent etre réalisés, on peut avantageusement, mais non limitativement, les choisir dans le groupe comprenant le polyéthylène à basse densité, les polyoléfines, le polypropylène et les matières thermoplastiques oléfiniques.

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée de la présente invention.

**Revendications**

1. Joint en élastomère destiné à rendre étanche l'interstice existant entre un premier élément et un deuxième élément, ledit joint étant du type constitué par un profilé (1) comportant une portion d'étanchéité (3) et une portion d'ancrage ou de fixation (2) à l'un ou l'autre desdits premier et deuxième éléments, à savoir à celui de ces deux éléments qui est destiné à supporter le joint, qui sont reliées entre elles directement ou par l'intermédiaire d'une éventuelle portion de liaison (4), lequel joint comporte un moyen de conformation du profilé (1) qui est intégré au joint élastomère et permet son adaptation à froid à une ou plusieurs portions ayant un profil curviligne, a priori quelconque, et appartenant à celui desdits premier et deuxième éléments qui supporte le joint, ce joint étant caractérisé en ce que ledit moyen de conformation à froid du profilé (1) est constitué par au moins un cordon (5), de section appropriée, qui est réalisé en une matière plastique, également appropriée.

2. Joint selon la revendication 1, caractérisé en ce que, lorsque celui desdits premier et deuxième éléments qui supporte le joint présente une ou plusieurs portions à profil curviligne qui sont contenues dans le plan longitudinal de symétrie du joint à l'état monté et conformé, les centres de courbure de ces portions à profil curviligne étant situés à l'intérieur de l'espace délimité par le profilé à l'état précité, le profil comporte un cordon unique et continu (5) en matière plastique qui est contenu dans ledit plan de symétrie du profilé (1) dans la portion qui est la plus éloignée de chacun desdits centres de courbure.

3. Joint selon la revendication 2, caractérisé en ce que ledit cordon unique continu (5) est disposé à la partie inférieure de la portion d'ancrage (2) du joint.

4. Procédé de conformation à froid du joint selon l'une quelconque des revendications 1 à 3, caractérisé en ce que l'adaptation du joint à la courbure desdites portions à profil curviligne est obtenue par étirage de chacune des portions du joint correspondant auxdites portions à profil curviligne, jusqu'à induire dans chacune de ces portions de joint une déformation plastique.

**Claims**

1. An elastomer gasket for sealing the gap between a first element and a second element, said gasket being of the type constituted by a section member (1) including a sealing portion (3) and an anchoring or fixing portion (2) for anchoring or fixing to one or other of said first and second elements, namely to that one of the elements which is intended to support the gasket, which portions are connected to each other directly or via an optional linking portion (4), which gasket includes shaping means for shaping the section member (1), which means are integrated in the elastomer gasket and enable it to be fitted cold to one or more portions of a priori arbitrary curvilinear profile and belonging to that one of said first and second elements which supports the gasket, the gasket being characterized in that said cold shaping means of the section member (1) is constituted by at least one cord (5) of appropriate section and made of a plastic material which is likewise appropriate.

2. A gasket according to claim 1, characterized in that when that one of said first and second elements which supports the gasket has one or more portions of curvilinear profile contained in the longitudinal plane of symmetry of the gasket in its mounted and shaped state, with the centers of curvature of said portions of curvilinear profile being situated inside the space delimited by the section member in the abovespecified state, the section member includes a single, continuous cord (5) of plastic material which is contained in said plane of symmetry of the section member (1) in that portion thereof which is furthest from each of said centers of curvature.

3. A gasket according to claim 2, characterized in that said single, continuous cord (5) is disposed at the bottom of the gasket anchoring portion (2).

4. A method of cold shaping the gasket of any one of claims 1 to 3, characterized in that the gasket is fitted to the curvature of said portions of curvilinear profile by stretching each of the portions of the gasket corresponding to said portions of curvilinear profile until plastic deformation occurs in each of said gasket portions.

**Patentansprüche**

1. Dichtung aus Elastomer, die dazu bestimmt ist, den Zwischenraum, der zwischen einem ersten Element und einem zweiten Element vorhanden ist, dicht zu machen, wobei diese Dichtung von der Art ist, welche von einem Profil (1) gebildet ist, das einen Dichtheitsteil (3) und einen Teil (2) für die Verankerung oder die Befestigung an dem einen oder anderem aus dem ersten und zweiten Element, d.h. an demjenigen dieser beiden Elemente, das dazu bestimmt ist, die Dichtung zu halten, aufweist, welche miteinander direkt oder durch einen eventuellen Verbindungsteil (4) verbunden sind, welche Dichtung ein Mittel der Formgebung des Profils (1) hat, das in die Elastomerdichtung integriert ist und ihre Kaltanpassung an eine oder mehrere Teile ermöglicht, die ein krummliniges Profil haben, von vorn herein irgendeines, und demjenigen aus dem ersten und zweiten Element angehören, welches die Dichtung hält, wobei diese Dichtung dadurch gekennzeichnet ist, daß das Mittel der kalten Formgebung des Profils (1) von wenigstens einem Strang (5) von geeignetem Querschnitt gebildet ist, der aus einem ebenfalls geeigneten Kunststoff hergestellt ist.

2. Dichtung nach Anspruch 1, dadurch gekennzeichnet, daß, wenn dasjenige aus dem ersten und zweiten Element, welches die Dichtung hält, einen oder mehrere Teile mit krummlinigem Profil aufweist, die in der Längssymmetrieebene der Dichtung im eingebauten und angepaßten Zustand enthalten sind, wobei sich die Krümmungsmittelpunkte dieser Teile mit krummlinigem Profil im Inneren des Raums befinden, der durch das Profil in dem vorerwähnten Zustand umgrenzt ist, das Profil einen einzigen und kontinuierlichen Strang (5) aus Kunststoff aufweist, der in der erwähnten Symmetrieebene des Profils (1) in dem Teil enthalten ist, der am weitesten von jedem dieser Krümmungsmittelpunkte entfernt ist.

3. Dichtung nach Anspruch 2, dadurch gekennzeichnet, daß der einzige kontinuierliche Strang (5) in dem unteren Teil des Verankerungsteils (2) der Dichtung angeordnet ist.

4. Verfahren zur Kaltformgebung der Dichtung nach irgendeinem der Ansprüche 1 bis 3, dadurch gekennzeichnet, daß die Anpassung der Dichtung an die Krümmung der erwähnten Teile von krummlinigem Profil durch Strecken von jedem der Teile der Dichtung, welche den erwähnten Teilen von krummlinigem Profil entsprechen, bis zum Bewirken einer plastischen Deformation in jedem dieser Teile der Dichtung erhalten wird.